# FASCICULE DE BREVET EUROPEEN

(11) **EP 3 658 510 B1**
(45) Date de publication et mention de la délivrance du brevet: **24.12.2025**
(21) Numéro de dépôt: 18713922.5
(22) Date de dépôt: 28.03.2018
(51) Int. Cl.: C02F 1/28, C02F 1/42, C02F 1/44, C02F 1/68, C02F 9/00

(54) **METHODE DE PRODUCTION D'EAU MINERALE A PARTIR D'UNE EAU DE VILLE**
VERFAHREN ZUR HERSTELLUNG VON MINERALWASSER AUS LEITUNGSWASSER
METHOD FOR PRODUCING MINERAL WATER FROM TAP WATER

(30) Priorité: 28.07.2017 BE 201705533
(43) Date de publication de la demande: 03.06.2020
(73) Titulaire: Aqvita Srl., 1180 Uccle (BE)
(72) Inventeur: TOB, Philippe, 1180 Uccle (BE)
(74) Mandataire: De Clercq & Partners
(86) Numéro de dépôt international: PCT/EP2018/057868
(87) Numéro de publication internationale: WO 2019/020221

(56) Documents cités:
- EP-A1- 3 034 474
- WO-A1-2012/020056
- WO-A1-2014/093049
- WO-A1-98/41218
- WO-A2-2012/038986
- US-A1- 2009 242 485

## Description

L'invention se situe dans le domaine de la production domestique d'eau minérale, plate ou pétillante.

En particulier, chaque habitation, et plus généralement chaque bâtiment dédié à l'accueil de personnes, que ce soit dans un cadre privé ou professionnel, est reliée à un réseau de distribution d'eau pour son alimentation en eau courante, aussi appelée eau de ville, eau de distribution ou eau du robinet. Généralement, dans de nombreux pays, cette eau du robinet est potable, c'est-à-dire propre à être consommée sans risque pour la santé.

Il est néanmoins fréquent que les propriétés gustatives de cette eau ne soient pas excellentes. Un goût de chlore désagréable, issu des traitements de désinfection, persiste souvent dans l'eau. Ce goût est gênant non seulement lors de la consommation directe de l'eau mais persiste également dans les préparations utilisant cette eau, comme par exemple dans le thé ou le café.

Pour pallier ce problème, les ménages achètent des bouteilles d'eau de source ou d'eau minérale naturelle, ayant un goût, une saveur, qui leur plait. Il est en effet bien connu que chaque eau minérale a des propriétés gustatives uniques, qui dépendent des ratios des différents éléments minéraux qu'elle contient. Cependant, la consommation recommandée étant d'un litre et demi d'eau par jour et par personne, le volume à déplacer du magasin au domicile peut représenter un réel fardeau.

Pour s'affranchir de l'achat d'importants volumes d'eau, de nombreux ménages utilisent plutôt des carafes filtrantes pour améliorer le gout de l'eau du robinet. Ce type de carafe est conçu pour qu'un volume d'eau prélevé au robinet soit entrainé, sous l'effet de la gravité, à travers une cartouche filtrante, contenant généralement du charbon actif. L'eau ainsi filtrée est généralement débarrassée de son mauvais goût, mais également de la majeure partie de ses minéraux. La cartouche filtrante a une durée de vie limitée et doit être remplacée très régulièrement, généralement tous les mois. La qualité gustative et minérale de l'eau filtrée dans ce type de carafe n'est pas constante au cours de la durée de vie de la cartouche, selon que la cartouche est neuve ou en fin de vie. De plus, l'eau ainsi filtrée n'est pas disponible instantanément. A cause de la configuration de la carafe, il faut attendre que tout le volume d'eau prélevé ait été filtré pour pouvoir en verser dans un verre, sinon l'eau non-encore filtrée fuit.

Des systèmes plus perfectionnés sont également disponibles, généralement pour un usage dans les entreprises. Un appareil, contenant une cartouche filtrante, est connecté au réseau de distribution d'eau. Généralement, cet appareil est équipé d'une pompe, pour assurer un débit d'eau ne dépendant pas de la simple gravité, d'une unité de refroidissement, pour fournir de l'eau rafraichie en parallèle de l'eau à température ambiante, et éventuellement d'une cartouche de gaz pour fournir également de l'eau gazéifiée. La cartouche filtrante a également ici une durée de vie limitée, et plus l'eau du robinet sera, par exemple dure ou chlorée, plus la cartouche s'usera rapidement.

Un système plus perfectionné, décrit dans les demandes de brevet NL1019544 et WO2004/103097, et WO 2014/093049, permet de recomposer une eau minérale déterminée par ajout, dans un réservoir, d'une solution mère concentrée en minéraux à un certain volume d'eau du robinet, préalablement purifié. Ce système comprend également au moins un autre réservoir dans lesquels le mélange est conservé jusqu'à utilisation. La possibilité de développement de bactéries et/ou d'algues ou de particules solides minérales dans les réservoirs durant le stockage est compensée par un système de recirculation à travers un filtre pour pouvoir obtenir à chaque instant une eau de qualité déterminée. La présence de réservoirs rend cependant ce système volumineux et énergivore à cause de la recirculation de l'eau minérale produite entre les réservoirs. De plus, les éléments minéraux ici utilisés sont principalement des chlorures et des sulfates, pour leur facilité de dissolution, ce qui n'est pas souhaitable d'un point de vue gustatif. L'utilisation des chlorures et sulfates se fait au détriment des carbonates, qui sont naturellement présents dans les eaux minérales commerciales et seraient préférables d'un point de vue gustatif et digestif.

Il a donc été jugé nécessaire par la demanderesse de développer un procédé permettant la production instantanée, à la demande, d'eau minérale de composition et de goût choisis.

### Solution de l'invention

A cet effet, la présente invention propose procédé de production instantanée d'une eau minérale, ayant une teneur en éléments minéraux prédéfinie, à partir d'une eau de ville ayant une teneur en éléments minéraux non appropriée et un pH connus et comprenant des impuretés, procédé comprenant les étapes suivantes :
· on prédéfinit (I) la teneur en minéraux de l'eau minérale à produire ;
· la teneur en minéraux et le pH de l'eau de ville sont analysés (J) ;
· la teneur prédéfinie et la teneur de l'eau de ville sont comparées (K) afin de déterminer les minéraux en excès à éliminer et les minéraux en défaut à ajouter afin de déterminer une méthode de déminéralisation et la nature et la quantité des éléments minéraux à ajouter, lesdits éléments minéraux à ajouter comprenant au moins du calcium et/ou du magnésium;
· le pH de l'eau minérale souhaitée et le pH de l'eau de ville sont comparés pour déterminer l'ajustement de pH nécessaire ;
· on prépare au moins une solution concentrée, une poudre de synthèse et/ou d'aragonite comprenant des éléments minéraux à ajouter, dont la nature et la quantité ont été déterminées;

puis, à chaque fois qu'un consommateur souhaite prélever de l'eau minérale :
   - on déclenche (A) le procédé de production ;
   - on élimine (B) les impuretés de l'eau de ville pour obtenir de l'eau purifiée;
   - on déminéralise (C) au moins en partie l'eau purifiée en éliminant sélectivement une partie des minéraux par élimination sélective partielle ou totale de minéraux préalablement déterminée ;
   - on ajuste le pH de l'eau déminéralisée en y injectant du dioxyde de carbone ;
   - on reminéralise (D) l'eau déminéralisée par injection d'un volume prédéterminé d'une solution concentrée, d'une poudre de synthèse et/
ou d'aragonite comprenant au moins les éléments minéraux en défaut dont la nature a été préalablement déterminée, pour en réajuster la teneur à ladite teneur prédéfinie, la poudre de synthèse étant une poudre de sels minéraux, au moins partiellement amorphe, et comprenant au moins du carbonate de calcium, du carbonate de magnésium, de l'hydroxyde de calcium ou de l'hydroxyde de magnésium ;
   · on prélève (E) l'eau reminéralisée ;
   · on arrête la production d'eau minérale ;
procédé caractérisé par le fait que, durant la production d'eau minérale :
   - on fait couler en continu une quantité d'eau déterminée, l'eau ayant un débit ;
   - on injecte régulièrement ledit volume jusqu'à la fin de l'écoulement de l'eau.

Les impuretés dont il est ici question peuvent être des impuretés solubles, par exemple des traces de micro-polluants organiques, comme des pesticides, des hydrocarbures, ou des traces de métaux lourds comme du cadmium ou du plomb.

Les impuretés peuvent également être insolubles, comme par exemple des débris de microorganismes, des métaux lourds précipités ou des agrégats minéraux.

La re-minéralisation de l'eau reminéralisée peut également comprendre le passage de l'eau sur une colonne de minéraux et/ou une résine échangeuse d'ions. Par colonne de minéraux, on entend un filtre ou une cartouche comprenant des sels solides formant un réseau et qui se dissolvent en partie lorsque l'eau parcourt ce réseau. Avantageusement, la colonne de minéraux comprend des éléments ayant une faible solubilité dans l'eau et qu'il est difficile de dissoudre en quantité suffisante dans la ou les solutions concentrées. Ces éléments peu solubles sont généralement le calcium et le magnésium sous forme de carbonate. La colonne peut par exemple contenir de la dolomie qui est un carbonate mixte de calcium et magnésium ou le calcite comprenant principalement du carbonate de calcium.

Une poudre comprenant au moins un élément minéral en défaut fait ici référence à une poudre de synthèse ou de l'aragonite micronisée. Ces poudres sont des poudres très fines, composées de particules ayant des diamètres de l'ordre de quelques microns, par exemple 5 à 200 microns, qui présentent une grande fluidité et dont on peut mesurer un volume, de façon très similaire à des solutions liquides.

L'aragonite est la forme polymorphique stable à haute température et haute pression du carbonate de calcium, les deux autres polymorphes stables en conditions ambiantes étant la calcite et la vatérite. L'aragonite oolithique marin est notamment originaire des Bahamas et de Floride.

Les poudres de synthèses désignent ici des sels minéraux bien particuliers, comme par exemple du carbonate de calcium, obtenus par précipitation dans des conditions particulières conférant aux particules des dimensions et propriétés spécifiques. Par exemple, l'article de Brečević, L. et Kralj, D. (2007 ; on calcium carbonates: from fundamental research to application. Croatica Chemica Acta, 80(3-4), 467-484) passe en revue les techniques permettant d'obtenir des formes polymorphiques de carbonate de calcium. Cet article décrit en particulier la formation de carbonate de calcium amorphe, moins stable que les formes cristallines (calcite, vatérite) ou hydratées, mais présentant un taux de dissolution plus élevé et qui peuvent avantageusement être utilisées pour la mise en œuvre du procédé de l'invention. L'aragonite peut elle aussi être obtenue par synthèse. Des poudres de synthèse de carbonate de calcium, de carbonate de magnésium, d'hydroxyde de calcium ou d'hydroxyde de magnésium peuvent par exemple être utilisées, ou un de leur mélange, de préférence au moins en partie sous forme amorphe.

Des poudres de synthèses mésoporeuses, comme par exemple celles décrites dans la demande WO2017174458, peuvent également avantageusement être utilisée pour la mise en œuvre de l'invention. Ces poudres étant en effet largement amorphes, elles présentent des propriétés de dissolution intéressantes.

Les poudres de synthèses ne sont donc pas des poudres micronisées ou broyée comme on peut trouver dans des systèmes industriels de reminéralisation, mais des poudres des sels minéraux, au moins en partie amorphes.

Les poudres de synthèse présentent l'avantage d'être encore plus concentrées que les solutions concentrées et permettent d'utiliser des cartouches moins encombrantes. Le dosage de petites quantité de poudre, i.e. quelques microlitres est possible à l'aide, par exemple, de technologies mises au point pour l'impression laser ou 3D, où des couches de poudres sont déposées. L'homme du métier peut néanmoins utiliser toute technologie adéquate pour le dosage de poudres fines. Les poudres minérales de synthèse et l'aragonite, en particulier les poudres amorphes, du fait notamment de leur morphologie, de la taille des particules et/ou de leur degré d'hydratation ont des taux de dissolution beaucoup plus rapide que les formes commerciales cristallines comme la calcite. Elles permettent une dissolution quasi instantanée Par « régulièrement » ou injection régulière, il faut ici comprendre que quelques microlitres ou millilitres de solution concentrée, de poudre de synthèse et/ou d'aragonite sont injectés à une fréquence déterminée par le débit d'eau à reminéraliser. Le volume injecté est déterminé de façon à obtenir un mélange efficace avec l'eau déminéralisée pour assurer l'homogénéité des concentrations en minéraux, au fil du temps, en sortie du procédé.

Dans certains cas, le pH de l'eau de ville étant éloigné du pH de l'eau minérale à produire, on doit ajuster le pH de l'eau reminéralisée.

Dans certains cas, il est également nécessaire d'ajuster le pH de l'eau déminéralisée avant la re-minéralisation pour optimiser la dilution de la solution concentrée dans l'eau déminéralisée et, le cas échéant, des éléments de la colonne de minéraux.

L'ajustement de pH peut être une acidification ou une basification. L'acidification est fait par injection de dioxyde de carbone avant la re-minéralization. La basification peut se faire par exemple par ajout d'un volume de solution basique.

Pour préparer une eau minérale gazeuse (pétillante, gazéifiée), on injecte du dioxyde de carbone, préférablement après la reminéralisation.

Le procédé de production d'eau minérale de l'invention est préférablement applicable à un usage domestique, et non industriel. La quantité d'eau minérale à produire reste limité à la consommation d'un foyer, voire d'une entreprise. Il permet de produire, instantanément, une eau minérale limpide, ayant un gout choisi par l'utilisateur, gout impliquant une composition particulière.

Par instantané, il faut comprendre immédiatement, dans les secondes qui suivent. Le procédé se démarque ainsi des procédés dans lesquels on remplit d'abord un réservoir interne afin d'y effectuer un mélange avec une concentré minérale avant de pouvoir prélever de l'eau minérale. Il se démarque aussi des procédés faisant intervenir des minéraux sous forme de sels solides, et dont la dissolution peut prendre plusieurs minutes ou heures avant de donner une eau minérale limpide. Le procédé de l'invention permet d'obtenir une eau minérale limpide en quelques secondes avec des sels solides de certaines morphologie, de taille de l'ordre de 5 à 200 microns et l'utilisation de système de microdosage de poudre et/ou avec l'utilisation systèmes de microdosage de solutions concentrées en minéraux permettant une injection régulière.

L'appareil décrit ci-après ne fait pas partie de la présente invention. Il s'agit d'un Appareil domestique comprenant un circuit de circulation d'eau d'une entrée vers au moins une sortie, ladite entrée étant pourvue d'une vanne d'entrée à connecter à un point d'entrée d'eau de ville et ladite sortie étant pourvue d'une vanne de sortie, circuit traversant en série une unité de filtration, une unité de déminéralisation et une unité de re-minéralisation,
appareil caractérisé par le fait que
- ladite unité de re-minéralisation comprend au moins une entrée secondaire, connectée à un dispositif de microdosage fluidique, en aval de laquelle une portion du circuit est un mélangeur statique, et
- la vanne d'entrée et la vanne de sortie sont agencées pour fonctionner en parallèle et simultanément.

Par « fonctionner en parallèle », on entend ici que lorsque l'une des vannes est ouverte, l'autre l'est également afin de ne pas générer d'accumulation d'eau dans le circuit. Cette caractéristique différencie l'appareil des systèmes où de l'eau déminéralisée est préalablement accumulée dans un réservoir interne pour procéder à son mélange avec une solution concentrée en minéraux.

Par domestique, on entend ici que l'appareil n'est pas adapté à une production industrielle et a une capacité de production et des dimensions lui permettant d'être installé dans une habitation particulière ou sur un lieu de travail, pour fournir de l'eau minéral à un nombre limité de personne. L'appareil peut également être adapté pour l'horeca ou placé sur le domaine public.

Avantageusement, le mélangeur statique est un insert hélicoïdal, permettant de créer une turbulence de l'eau qui y circule afin d'optimiser le mélange entre l'eau déminéralisée, le cas échéant le dioxyde de carbone, et le volume des minéraux ajoutés. Avantageusement encore, le dispositif de microdosage fluidique est une pompe ou vanne micro-doseuse ou un dispositif de microdosage de poudre micronisée, comme par exemple un système à ultrasons comportant une buse de dosage dont le diamètre est de 100 à 400 microns, ou un système similaire à ceux utilisés en imprimerie 3D, comme par exemple ceux décrits par X Lu, S Yang et JRG Evans (Microfeeding with different ultrasonic nozzle designs ; - Ultrasonics, 2009; Dry powder microfeeding system for solid freeform fabrication : Solid Freeform Fabrication Symposium, Austin, TX, 2006 ; Metering and dispensing of powder : the quest for new solid freeforming techniques, Powder Technology, 178(1), 56-72. DOI: 10.1016/j.powtec.2007.04.004).

Dans certains cas, pour limiter le risque de précipitation d'éléments minéraux pendant le mélange, il est préférable d'installer plusieurs entrées secondaires en série, connectée chacune à un dispositif de microdosage fluidique, afin de procéder à un mélange séquentiel des minéraux.

Le dispositif de microdosage fluidique dispense des micro-volumes de solution concentrée ou de poudres, en fonction du débit de l'eau traversant l'unité de re-minéralisation. La fréquence à laquelle est dispensée la solution concentrée ou la poudres, ainsi que le volume dispensé est prédéterminé en fonction du débit de circulation de l'eau à reminéraliser pour optimiser l'efficacité de l'insert hélicoïdal et obtenir, en sortie du système, une eau de concentration sensiblement constante au cours du temps.

L'unité de re-minéralisation peut également comprendre une colonne de minéraux et/ou une résine échangeuse d'ions.

Par mélange séquentiel, il faut comprendre qu'un premier micro-volume d'une solution concentrée en certains éléments minéraux est injecté dans l'eau déminéralisé pour donner une eau partiellement reminéralisée, puis un second micro-volume d'une seconde solution concentrée en éléments minéraux est ajoutée, et éventuellement un troisième micro-volume, etc... Chaque solution concentrée peut avoir une composition différente, c'est-à-dire contenir des éléments minéraux différents ou les même éléments, mais à des concentrations différentes. Les teneurs de ces solutions concentrées sont ajustées en fonction des compatibilités des différents éléments minéraux, en terme de solubilité.

L'utilisation de solutions concentrées en éléments minéraux plutôt que l'injection de sels solides permet ici de s'affranchir du temps de dissolution de tels solides, qui nuirait à l'instantanéité du procédé. Néanmoins, l'utilisation de certaines formes de poudres de synthèse permet une dissolution quasi-instantanée. L'injection de solutions concentrées ou de poudres de synthèse ou d'aragonite peut néanmoins être complétée par, ou combinée à une ou plusieurs colonnes de sels minéraux et/ou une ou plusieurs résines échangeuses d'ions permettant l'optimisation de la séquence de reminéralisation.

L'invention sera mieux comprise à l'aide de la description suivante de plusieurs formes de réalisation de l'invention, en référence au dessin en annexe, sur lequel :
la figure 1 est un schéma bloc du procédé de l'invention ;
la figure 2 est un schéma de l'appareil qui ne fait pas partie de la présente invention ;
la figure 3 est une vue en perspective de l'appareil de la figure 2, et
la figure 4 est un schéma d'un autre appareil qui ne fait pas partie de la présente invention.

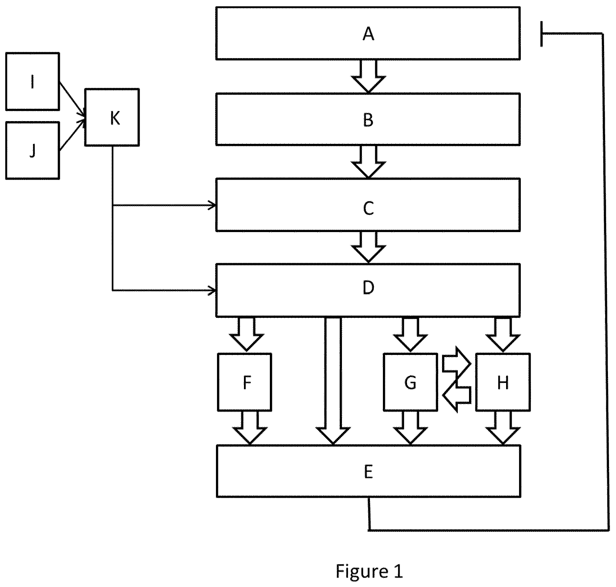

En référence à la figure 1, le procédé de production instantanée d'une eau minérale, ayant une teneur en éléments minéraux prédéfinie, pour un consommateur, à partir d'une eau de ville, ayant une teneur en éléments minéraux et un pH connus et comprenant des impuretés, l'eau de ville comprenant des éléments minéraux à une teneur non appropriée, comprend plusieurs étapes.

Dans une première étape A, un consommateur manifeste son désir de prélever de l'eau minérale, ce qui déclenche le procédé de production.

Dans une étape B, les impuretés de l'eau de ville sont éliminées pour obtenir de l'eau purifiée. Les techniques spécifiques de l'étape de purification dépendent de la qualité de l'eau de ville. L'étape de purification a pour objectif d'éliminer les matières en suspension, le chlore résiduel et d'autres composants comme les métaux lourds.

Dans une étape C, l'eau purifiée est déminéralisée par élimination partielle de minéraux, afin d'enlever les composants indésirables qui ne sont pas éliminés par l'étape de purification. Ces composants sont principalement des ions monovalents et bivalents. L'étape de déminéralisation peut être réalisée à l'aide de résines échangeuse(s) d'ions, qui permet une déminéralisation sélective. Le choix de la technique est ici encore déterminé à partir des compositions de l'eau de ville et de l'eau minérale à produire.

Dans une étape D, l'eau déminéralisée est reminéralisée par injection d'un volume d'une solution concentrée ou d'un volume d'une poudre de synthèse ou d'aragonite comprenant au moins un élément minéral en défaut pour en réajuster la teneur à ladite teneur prédéfinie. Ce volume peut en fait être divisé en plusieurs volumes de solutions concentrées et/ou de poudres ayant des compositions différentes en minéraux ou des concentrations différentes, qui seront ajoutées au niveau de positions successives dans le circuit, indépendamment du fait que ces volumes soient injectés régulièrement à une fréquence prédéterminée.

L'eau peut en outre passer sur une ou plusieurs colonnes de minéraux et/ou résine échangeuse d'ions, ce passage entrainant la dissolution de minéraux solides de la colonne et/ou l'échange d'ions avec la résine dans l'optique de compléter la re-minéralisation.

Du dioxyde de carbone, sous forme gazeuse, est injecté dans le circuit entre l'étape C et l'étape D à des fins de régulation de pH. Cette étape peut s'avérer nécessaire pour favoriser la dissolution des minéraux à l'étape D ou pour acidifier sensiblement l'eau déminéraliser, lorsque le pH de l'eau minérale à produire est relativement acide et que les ions carbonates ne peuvent pas être apportés uniquement par des espèces dissoutes dans la solution concentrée en minéraux.

Dans l'étape E, le consommateur prélève la quantité d'eau reminéralisée dont il a besoin, par exemple pour sa consommation personnelle, ou pour remplir une carafe. Lorsque le consommateur a prélevé la quantité d'eau nécessaire, le procédé de production d'eau minérale s'arrête, c'est-à-dire que l'eau de ville cesse d'alimenter l'étape de filtration. Ceci implique qu'il n'y a pas d'accumulation d'eau au cours de la production. Toutes les étapes ont lieu « en ligne », c'est-à-dire que l'eau circule en permanence. La re-minéralisation doit donc être instantanée.

Plusieurs étapes optionnelles sont également ici insérées entre la re-minéralisation D et le prélèvement E.

Dans le cas où l'eau minérale à produire est une eau gazeuse, une étape H de gazéification est introduite après la re-minéralisation.

Le consommateur peut avoir le choix de prélever de l'eau chaude, de l'eau tempérée, c'est-à-dire à température ambiante, ou de l'eau refroidie. Des étapes de chauffage F ou de refroidissement G peuvent alors avoir lieu. Le refroidissement G peut éventuellement être mis en œuvre avant ou après la gazéification H.

Ces étapes A à H vont ainsi être mises en œuvre à chaque fois qu'un consommateur souhaite prélever de l'eau reminéralisée.

Un certain nombre d'étapes préliminaires doivent cependant être accomplies pour permettre la production de l'eau minérale souhaitée.

Le consommateur, dans une étape I, doit d'une part définir l'eau minérale qu'il désire produire à domicile, c'est-à-dire son gout, sa teneur en minéraux. Il peut notamment s'inspirer des eaux minérales naturelles commerciales.

D'autre part, dans une étape J, la teneur en minéraux et le pH de l'eau de ville distribuée là où il souhaite produire l'eau minérale doivent être analysés. Généralement, ces informations sont disponibles, des analyses réglementaires devant avoir lieu régulièrement.

La teneur prédéfinie et la teneur de l'eau de ville sont alors comparées dans une étape K afin de déterminer les minéraux en surplus, ou en excès, à éliminer et les minéraux en défaut à ajouter. A partir de cette détermination, la méthode de déminéralisation, totale ou partielle de l'étape C est déterminée, ainsi que la nature et la concentration des éléments minéraux à ajouter à l'étape de re-minéralisation D.

De la même façon, la comparaison du pH de l'eau minérale souhaitée et de l'eau de ville distribuer permet de déterminer l'ajustement de pH nécessaire.

Par exemple, le tableau 1 détaille la composition de l'eau de ville distribuée dans la commune de Uccle et la compare à celle de l'eau de marque déposée Evian.

**Tableau 1.**

| Élément minéral | Eau de ville Uccle (ppm) | Evian (ppm) | différence |
|---|---|---|---|
| Ca²⁺ | 6.6 | 78 | 71.4 |
| Mg²⁺ | 5.2 | 24 | 18.8 |
| Na⁺ | 25.9 | 5 | -20.9 |
| K⁺ | 3.1 | 1 | -2.1 |
| HCO₃⁻ | 175.3 | 357 | 181.7 |
| SO₄²⁻ | 65.8 | 10 | -55.8 |
| Cl⁻ | 18.9 | 4.5 | -14.4 |
| NO₃⁻ | 12,0 | 3.8 | -8.2 |
| Matière totale dissoute | 400 | 357 | |
| pH | 7.98 | 7.2 | |

La comparaison indique que l'eau de ville contient un excès d'ions sodium (Na⁺), potassium (K⁺), sulfates (SO₄²⁻), chlorure (CF) et nitrate (NO₃⁻ ) et un défaut d'ions calcium (Ca²⁺), magnésium (Mg²⁺) et bicarbonate (HCO₃⁻). La différence en bicarbonates est en partie responsable de la différence de pH entre les deux eaux.

Pour produire une eau minérale sensiblement similaire à de l'eau d'Evian, à partir de l'eau de la ville de Uccle, il est possible de procéder à une déminéralisation par osmose inverse. 99.5% des ions contenus dans l'eau de ville de Uccle sont ainsi éliminés. La déminéralisation est ici quasiment totale.

Pour reminéraliser de façon appropriée l'eau osmosée, la composition de la solution concentrée en éléments minéraux est ensuite calculée. Ces éléments minéraux n'étant pas accessibles sous leur forme ionique pure, il est important de choisir les sels ou couples anions-cations de façon appropriée.

La solution concentrée en ions minéraux est ensuite préparée en deux temps.

Dans un premier temps, sept solutions « monosaline » sont préparées contenant chacune un seul sel dissout à une concentration inférieure à sa concentration de saturation. Le tableau 2 détaille les caractéristiques de chaque sel utilisé et la concentration des solutions « monosalines » préparées.

**Tableau 2**

| **Solution** | **Sel** | **Solubilité maximale (g/100 mL)** | **Concentration (g/100 mL)** |
|---|---|---|---|
| 1 | Ca(HCO3)2 | 16.1 à 0°C et 16.6 à 20°C | 10 |
| 2 | Mg(HCO3)2 | 2.0-3.1 ^{[1]} | 2 |
| 3 | NaHCO3 | 6.9 at 0°C and 9.6 at 20°C | 5 |
| 4 | KHCO3 | 33.7 at (20°C) | 20 |
| 5 | NaCl | 35.9 | 20 |
| 6 | Ca(NO3)2.4H2O | 129.0 at 20°C | 50 |
| 7 | MgSO4.7H2O | 26.9 at 0°C and 35.1 at 20°C | 10 |

L'élément magnésium est ici apporté par plusieurs espèces saline : du sulfate de magnésium (MgSO₄) hepta-hydrate et du bicarbonate de magnésium (Mg(HCO₃)₂). C'est également le cas du calcium, apporté sous forme de nitrate (Ca(NO₃)₂) et sous forme de bicarbonate (Ca(HCO₃)₂). Le sodium est apporté sous forme de chlorure (NaCl) et de bicarbonate (NaHCO₃) et le potassium sous forme de bicarbonate (KHCO₃). L'eau de ville de Uccle devant être légèrement acidifiée pour obtenir le résultat désiré, les sels de bicarbonate, conférant une certaine acidité, ont ici été privilégiés par rapport aux hydroxydes.

Une fois les solutions « monosalines » préparées, le volume de chacune de ces solutions qu'il faut prélever pour reconstituer un litre d'eau Evian est calculé, comme indiqué dans la deuxième colonne du tableau 3. Puis, ces volumes sont multipliés par 90 et assemblés pour préparer une seule solution, concentrée 90 fois, qui sera injectée dans le circuit, comme détaillé dans la troisième colonne du tableau 3.

**Tableau 3**

| **Solution "monosaline" concentrée** | **Volume à prélever pour 1 L d'Evian** | **Volume (L): solution 90x concentrée** |
|---|---|---|
| 1 | 0.003105 | 0.279487 |
| 2 | 0.006463 | 0.581709 |
| 3 | 0.000152 | 0.013694 |
| 4 | 0.000013 | 0.001152 |
| 5 | 0.000037 | 0.003338 |
| 6 | 0.000014 | 0.001303 |
| 7 | 0.000257 | 0.023092 |

Une petite quantité de CO2 est également ajouté pour porter le pH de l'eau reminéralisée à 7,2 (approx. 0,0011 mol CO2 par litre).

Bien évidemment, la solution concentrée sera ajoutée par micro-volumes à l'eau déminéralisée. La solution étant ici concentrée 90 fois, il faut la diluer par un facteur 90 pour reconstituer l'eau de type Evian. Par exemple, 1 mL peut être injecté pour chaque 89 mL d'eau déminéralisée circulant dans le circuit. Pour plus d'efficacité, il est préférable d'ajouter plutôt 0.1 mL tous les 8.9 mL d'eau déminéralisée circulant dans le circuit, voir de plus faibles volumes à une fréquence plus élevée, la fréquence étant ici le nombre de fois qu'une injection a lieu par unité de volume d'eau déminéralisée à reminéraliser. La fréquence doit être adaptée à la capacité du mélangeur, et optimisée pour obtenir, en sortie, une eau de concentration sensiblement constante en minéraux.

Il est également possible de de traiter l'eau de Uccle pour obtenir une eau similaire à l'eau de marque déposée Gerolsteiner.

La composition de l'eau Gerolsteiner est comparée à celle de l'eau de la ville de Uccle dans le tableau 4.

**Tableau 4.**

| Élément minéral | Eau de ville Uccle (ppm) | Gerolsteiner (ppm) |
|---|---|---|
| Ca²⁺ | 6.6 | 348 |
| Mg²⁺ | 5.2 | 108 |
| Na⁺ | 25.9 | 118 |
| K⁺ | 3.1 | 10.8 |
| HCO₃⁻ | 175.3 | 1816 |
| SO₄²⁻ | 65.8 | 38.7 |
| Cl⁻ | 18.9 | 39.7 |
| NO₃⁻ | 12,0 | 5.1 |
| Matière totale dissoute | 400 | 2488 |
| pH | 7.98 | 5.9 |

Les mêmes solutions concentrées « monosalines » que celles décrites dans le tableau 2 sont préparées.

L'eau Geroldsteiner contient beaucoup plus, en poids, d'éléments minéraux que l'eau Evian, en particulier de calcium, magnésium et bicarbonate. Le volume de solutions « monosalines » 1 et 2 à ajouter pour reconstituer un litre d'eau Geroldsteiner est donc important, ce qui doit être pris en compte dans la séquence de re-minéralisation. Il est ainsi proposé de préparer une solution concentrée 18 fois en éléments minéraux, comme décrit dans le tableau 5. L'injection de la solution concentrée en éléments minéraux pourra ici se faire séquentiellement par deux injections successives.

**Tableau 5.**

| **Solution "monosaline" concentrée** | **Volume (L): Gerolsteiner** | **Volume (L): Gerolsteiner 18x concentrée** |
|---|---|---|
| 1 | 0.014010 | 0.252177 |
| 2 | 0.029596 | 0.532724 |
| 3 | 0.006742 | 0.121360 |
| 4 | 0.000138 | 0.002489 |
| 5 | 0.000327 | 0.005890 |
| 6 | 0.000019 | 0.000350 |
| 7 | 0.000983 | 0.017688 |

Une quantité de CO2 est également ajouté pour porter le pH à 5, 9 (approx. 0,13 mol CO2 par litre).

Il serait cependant possible d'apporter moins de calcium et de magnésium par l'injection de solution concentrée en minéraux, et de compenser en faisant passer l'eau sur un filtre (cartouche, colonne) rempli de dolomie dont la composition permet d'obtenir la concentration d'ions désirés. On peut également faire passer l'eau partiellement minéralisé sur une résine échangeuse d'ion afin d'apporter du Mg ou du bicarbonate HCO3-. On peut également envisager d'ajouter un second dispositif de microdosage permettant d'injecter une poudre de synthèse comprenant du magnésium et/ou du magnésium.

Le choix du procédé peut ainsi dépendre de plusieurs paramètres, en particulier de la composition désirée, du coût, de la compacité du système, etc....

Les étapes du procédé ayant été décrites, un exemple de système permettant sa mise en œuvre va maintenant être présenté, mais le système ne fait pas partie de la présente invention.

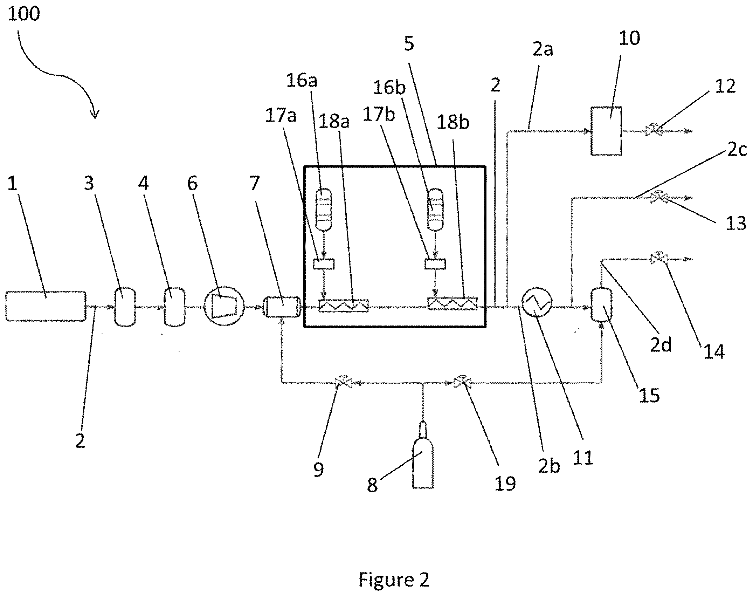

En référence à la figure 2, l'appareil 100 comprend un port de connexion 1 pour connecter l'entrée du circuit 2 au réseau d'eau de ville. Le circuit 2 traverse une cartouche 3 de charbon actif granulé, une unité 4 d'osmose inverse et une unité de re-minéralisation 5. Une pompe 6 et un diffuseur de dioxyde de carbone 7, connecté à une bouteille de dioxyde de carbone 8 via une vanne 9, sont ici insérés entre l'unité de déminéralisation et l'unité de re-minéralisation 5. En sortie de l'unité de re-minéralisation, le circuit 2 se divise en deux sous circuits 2a et 2b. Le sous circuit 2a traverse une unité de chauffage 10 avant d'atteindre la vanne de sortie 12 d'eau minérale chaude. Le sous circuit 2b traverse une unité de refroidissement 11 avant de se diviser à nouveaux en deux sous-circuits 2c et 2d. Le sous-circuit 2c débouche sur la vanne de sortie 13 d'eau refroidie et le sous-circuit 2d traverse l'unité de gazéification 15, reliée à la bouteille de dioxyde de carbone 8 par une vanne 19, avant d'atteindre la vanne de sortie 14 d'eau refroidie gazéifiée.

Dans l'unité de re-minéralisation 5, le circuit traverse un premier mélangeur statique 18a à l'entrée duquel est raccordé un premier dispositif de microdosage fluidique 17a connecté à un réservoir 16a contenant une première solution concentrée en minéraux. Le circuit traverse ensuite un second mélangeur statique 18b à l'entrée duquel est raccordé un second dispositif de microdosage fluidique 17b connecté à un réservoir 16b contenant une seconde solution concentrée en minéraux. Le dispositif de microdosage fluidique dispense des micro-volumes de solution concentrée, en fonction du débit de l'eau les traversant. La fréquence à laquelle est dispensée la solution concentrée, ainsi que le volume dispensé est prédéterminé en fonction du débit de circulation de l'eau à reminéraliser.

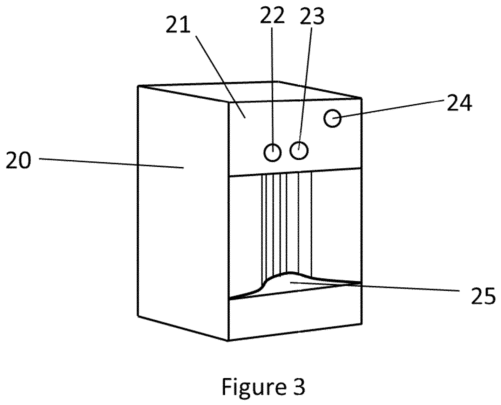

En référence à la figure 3, l'ensemble des éléments de l'appareil sont contenus dans un boitier 20, présentant à sa surface le port de connexion 1 (non représenté), préférablement à l'arrière du boitier, et un panneau de commande 21, sur l'avant du boitier, sur lequel sont disposés une touche 22 de commande d'eau plate refroidie ou rafraichie, une touche 23 de commande d'eau gazéifiée refroidie et une touche 24 de commande d'eau chaude. L'avant du boitier comprend un renfoncement formant une plateforme 25.

L'appareil décrit ci-dessus est un exemple d'appareil permettant la mise en œuvre du procédé de l'invention pour la production d'une eau ressemblant à l'eau de marque déposée Evian à partir de l'eau de ville de Uccle dont les teneurs sont décrites dans le tableau 1. Les étapes I, J et K décrites plus haut ont permis de déterminer la composition et la concentration de la solution mère à verser dans les réservoirs 16a et/ou 16b.

Un utilisateur ou consommateur place un verre sur la plateforme 25 de l'appareil et déclenche la production d'eau en appuyant sur une des touches 22 à 24 selon son choix. Le port de connexion 1, ici une électrovanne, s'ouvre pour permettre l'entrée de l'eau de ville dans le circuit 2.

L'eau de ville traverse tout d'abord la cartouche 3 de charbon actif granulé où elle y est purifiée par élimination du chlore résiduel ainsi que d'autres polluants comme le plomb. Un filtre micron (non représenté) est associé à cette cartouche afin d'éliminer toutes les particules éventuellement en suspension dans l'eau de ville.

L'eau ainsi purifiée traverse ensuite l'unité 4 comprenant une ou plusieurs cartouches d'osmose inverse permettant à l'eau d'être débarrassée de 99.5% de ses minéraux. La pompe 6, placée en aval de l'unité de déminéralisation 4 assure le débit d'eau et le différentiel de pression nécessaire au fonctionnement des cartouches d'osmose inverse.

L'eau déminéralisée passe ensuite à travers un diffuseur 7 de dioxyde de carbone. Le pH devant ici être légèrement baissé avant la re-minéralisation, la vanne 9 connectant le diffuseur 7 à la bouteille de dioxyde de carbone 8 est ouverte pour permettre l'injection, en continu durant la production, d'un débit précis de CO2, qui, une fois dissout, forme une partie du bicarbonate requis. L'abaissement du pH permet ici non seulement d'atteindre la valeur de pH désirée, mais également de faciliter la dissolution des sels en aval de l'injection du CO2.

L'eau déminéralisée entre ensuite dans l'unité de re-minéralisation 5. Le premier dispositif de microdosage fluidique 17a, ici une pompe micro-doseuse, connecté au réservoir 16a contenant la solution concentrée en minéraux décrite dans le tableau 1, est actionné, dès qu'un courant d'eau apparait dans le circuit, c'est-à-dire dès que la vanne d'entrée 1 s'ouvre. La pompe micro-doseuse injecte ainsi dans le circuit 2 un flux/débit de solution concentrée en minéraux contenue dans le réservoir 16a, soit sous forme continue, soit sous forme de micro-volumes à intervalles réguliers. La pompe micro-doseuse permet de gérer des débits de l'ordre du microlitre ou du nanolitre par seconde avec une grande précision. La solution concentrée se mélange avec l'eau déminéralisée au niveau du mélangeur statique 18a, ici un insert hélicoïdal, qui assure une turbulence suffisante dans le circuit 2 pour homogénéiser l'eau reminéralisée, sans provoquer de précipitation de sels.

Après la re-minéralisation, selon le choix initial du consommateur, l'eau se dirige vers l'une des vannes de sorties 12, 13 ou 14.

Si l'utilisateur a appuyé sur la touche 22 dans le but d'obtenir de l'eau plate refroidie, la vanne 13 est ouverte. Le courant d'eau emprunte alors le sous-circuit 2b et traverse ici un module thermoélectrique en aluminium permettant le refroidissement de l'eau entre 5°C et 10 °C. L'eau refroidie emprunte ensuite le sous-circuit 2c avant de sortir par la vanne 13.

Si l'utilisateur a appuyé sur la touche 23, la vanne 14 est ouverte. Comme décrit précédemment, l'eau est d'abord refroidie puis passe dans un saturateur 15 dans lequel est injecté du dioxyde de carbone gazeux à haute pression. Le flux de dioxyde de carbone est contrôlé par la vanne 19 et est injecté soit en continu ou par pulsions à intervalles réguliers. Le dioxyde de carbone se dissout dans l'eau minérale refroidie avant de sortir du sous-circuit 2d par la vanne 14.

Si l'utilisateur a appuyé sur la touche 24, la vanne 12 est ouverte. L'eau reminéralisée emprunte le sous-circuit 2a, traversant un module de chauffage électrique, afin d'y atteindre une température comprise entre 80°C et 95 °C, avant de sortir du sous-circuit 2a par la vanne 12.

Les sorties correspondant aux vannes 12, 13 et 14 sont de préférence des tuyaux rassemblés, soit en une ouverture unique, soit juxtaposés, au-dessus de la plateforme 25. Leur ouverture est arrangée verticalement vers le bas pour que l'eau produite tombe dans le verre placé par le consommateur sur la plateforme.

La production étant instantanée, la pression sur une des touches de commande entraine donc simultanément l'ouverture de la vanne d'entrée 1 et d'une vanne de sortie 12, 13 ou 14.

Une quatrième vanne de sortie peut également être envisagée, permettant la fourniture d'eau tempérée, c'est-à-dire à température ambiante. Dans ce cas, l'eau re-minéralisée passe directement de l'unité de re-minéralisation à la vanne de sortie d'eau tempérée.

Il peut être prévu que les unités de refroidissement et de réchauffement fonctionnent en permanence, afin que de l'eau froide ou de l'eau chaude soit instantanément disponible.

Il peut également être prévu, dans un souci d'économie d'énergie, que ces unités ne fonctionnent qu'à la demande. Dans ce cas, un court délai peut être programmé entre le moment ou l'utilisateur presse la touche de son choix et le moment ou la production d'eau minérale commence, afin de permettre la mise en température de l'unité de chauffage ou de l'unité de refroidissement.

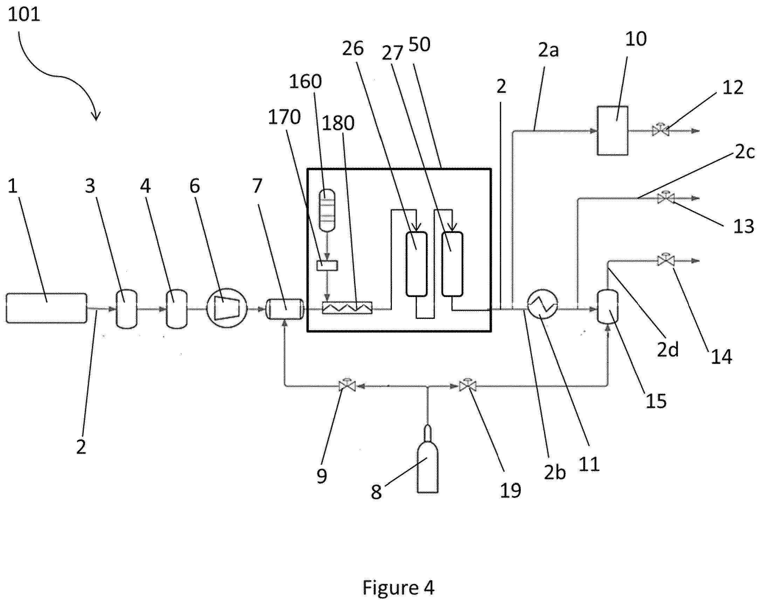

En référence à la figure 4, un appareil 101 peut comprendre une unité de re-minéralisation 50 légèrement différente de celle décrite pour l'appareil 100. Le circuit 2 traverse ici un mélangeur statique 180 à l'entrée duquel est raccordé un dispositif de microdosage fluidique 170 connecté à un réservoir 160 contenant une solution concentrée en minéraux. La solution concentrée en minéraux ne permet pas ici l'apport de l'intégralité des éléments. Le circuit traverse alors ensuite une colonne de sels 26, qui peut par exemple être constituée de dolomie. Des ions magnésium, calcium et bicarbonate se dissolvent au passage du courant d'eau, qui atteint ensuite une résine échangeuse d'ions 27. Celle-ci peut par exemple permettre d'échanger des ions sodium en calcium, si la concentration en calcium requise est particulièrement élevée. Elle peut également permettre d'échanger des chlorures en carbonates si nécessaire.

Les dispositifs de microdosage fluidique 17a, 17b et 170 décrits en références aux figures 2 et 4 sont ici des pompes micro-doseuse connectées à des réservoirs 16a, 16b et 160 contenant des solutions concentrées en minéraux. Ces pompes peuvent être remplacées, au moins en partie, par des systèmes, ou cartouches, de microdosage de poudres.

Les différents éléments de l'appareil sont préférablement agencés pour minimiser le volume total du circuit afin d'éviter les volumes morts. En effet, les volumes morts sont propices au développement d'algues ou de bactéries, ce qui n'est pas souhaitable.

Une fonction de purge pourrait également être prévue, afin de « nettoyer » le système après une inutilisation prolongée, ou lors du remplacement de certains éléments de l'appareil.

En effet, les cartouches de charbon actif et d'osmose inverse doivent être périodiquement remplacées. De même, les réservoirs de solution concentrée en éléments minéraux doivent être régulièrement remplis.

Les différents éléments de l'appareil peuvent être remplacés pour tout autre élément ou système ayant la même fonction et permettant d'obtenir le même résultat.

L'étape de déminéralisation pourrait, par exemple, être également réalisée au moyen d'une cartouche de résine échangeuse d'ions. Une résine échangeuse d'ions, généralement à base de zéolithes ou de polymères présentant des groupes ioniques sur leurs chaines, permet de substituer un type d'ion, par exemple des cations sodium, par un autre type d'ion, par exemple des cations calcium. Selon la résine ou le mélange de résine utilisé, un ou plusieurs types d'ion peuvent être substitués, permettant ainsi une déminéralisation sélective.

La re-minéralisation ici décrite est possible à partir d'une seule solution concentrée en minéraux. Il est néanmoins possible, dans certains cas, qu'il ne soit pas possible, pour des raisons de saturation par exemple, de dissoudre de façon suffisamment concentrée tous les éléments à ajouter. Dans ce cas, les éléments minéraux à ajouter sont répartis dans deux, voire plusieurs solutions concentrées, ayant la même composition ou des compositions différentes, et/ou des poudres fines de synthèse et/ou d'aragonite. Ces deux solutions concentrées et/ou poudres sont alors placées dans les réservoirs 16a et 16b et injectées en série à l'aide des dispositifs de microdosage fluidique 17a et 17b, chaque injection étant suivie d'une phase de mélange dans les mélangeurs statiques 18a et 18b.

Alternativement, si une seule solution concentrée est nécessaire, le second réservoir peut également être rempli de cette solution et être utilisé lorsque le premier réservoir est vide, doublant ainsi l'autonomie de l'appareil en solution concentrée.

Des réservoirs à recharger sont ici décrits. Il est également envisageable de fournir la solution concentrée et/ou les poudres sous forme de bouteilles ou capsules « consommable », c'est-à-dire se fixant directement sur les vannes de microdosage fluidique et pouvant être jetées lorsqu'elles sont vides.

L'unité de refroidissement n'est pas limitée à un module thermoélectrique en aluminium. Toute autre technique permettant de refroidir l'eau circulant dans le sous-circuit 2b est également envisageable.

Le saturateur est ici décrit en aval de l'unité de refroidissement, mais il pourrait également être intégré à cette unité.

L'unité de chauffage n'est pas non plus limitée à la forme décrite ici.

Un certain nombre de composants du système sont avantageusement reliés à une unité électronique de pilotage. C'est par exemple le cas de toutes les vannes d'entrée et de sortie ainsi que les vannes connectées à la bouteille de dioxyde de carbone et les vannes de microdosage fluidique, la pompe 6 et les unités de refroidissement 11 et de chauffage 10. L'unité électronique peut ainsi permettre de gérer les débits dans les différents circuits et sous-circuits, les températures de chauffage ou de refroidissement et les volumes et la fréquence d'injection des solutions concentrées dans le circuit.

Dans le cas où il n'est pas requis de pouvoir gazéifier l'eau, il est tout à fait envisageable de simplifier le circuit en s'affranchissant de toute la partie du circuit relié à la bouteille de dioxyde de carbone.

L'appareil peut être construit sous une forme standard comprenant toutes les fonctionnalités. Selon les compositions de l'eau de ville de la commune d'installation et de l'eau minérale souhaitée, il peut être programmé pour que seulement certaines fonctionnalités soient utilisées.

## Revendications

1. Procédé de production instantanée d'une eau minérale, ayant une teneur en éléments minéraux prédéfinie, à partir d'une eau de ville ayant une teneur en éléments minéraux non appropriée et un pH connus et comprenant des impuretés, procédé comprenant les étapes suivantes :
• on prédéfinit (I) la teneur en minéraux de l'eau minérale à produire ;
• la teneur en minéraux et le pH de l'eau de ville sont analysés (J) ;
• la teneur prédéfinie et la teneur de l'eau de ville sont comparées (K) afin de déterminer les minéraux en excès à éliminer et les minéraux en défaut à ajouter afin de déterminer une méthode de déminéralisation et la nature et la quantité des éléments minéraux à ajouter, lesdits éléments minéraux à ajouter comprenant au moins du calcium et/ou du magnésium;
• le pH de l'eau minérale souhaitée et le pH de l'eau de ville sont comparés pour déterminer l'ajustement de pH nécessaire ;
• on prépare au moins une solution concentrée, une poudre de synthèse et/ou d'aragonite comprenant des éléments minéraux à ajouter, dont la nature et la quantité ont été déterminées;
puis, à chaque fois qu'un consommateur souhaite prélever de l'eau minérale :
• on déclenche (A) le procédé de production :
• on élimine (B) les impuretés de l'eau de ville pour obtenir de l'eau purifiée;
• on déminéralise (C) au moins en partie l'eau purifiée en éliminant sélectivement une partie des minéraux par élimination sélective partielle ou totale de minéraux préalablement déterminée ;
• on ajuste le pH de l'eau déminéralisée en y injectant du dioxyde de carbone ;
• on reminéralise (D) l'eau déminéralisée par injection d'un volume prédéterminé d'une solution concentrée, d'une poudre de synthèse et/ou d'aragonite comprenant au moins les éléments minéraux en défaut dont la nature a été préalablement déterminée, pour en réajuster la teneur à ladite teneur prédéfinie, la poudre de synthèse étant une poudre de sels minéraux, au moins partiellement amorphe, et comprenant au moins du carbonate de calcium, du carbonate de magnésium, de l'hydroxyde de calcium ou de l'hydroxyde de magnésium ;
• on prélève (E) l'eau reminéralisée ;
• on arrête la production d'eau minérale ;
procédé **caractérisé par le fait que**, durant la production d'eau minérale :
• on fait couler en continu une quantité d'eau déterminée, l'eau ayant un débit ;
• on injecte régulièrement ledit volume jusqu'à la fin de l'écoulement de l'eau.

2. Procédé selon l'une des revendications 1 dans lequel l'étape de reminéralisation de l'eau reminéralisée comprend en outre le passage de l'eau sur une colonne de minéraux et/ou une résine échangeuse d'ions.

3. Procédé selon l'une des revendications 1 à 2, selon lequel on injecte (H) du dioxyde de carbone dans l'eau reminéralisée pour la gazéifier.

4. Procédé selon l'une des revendications 1 à 3, selon lequel on refroidit (G) l'eau reminéralisée ou on chauffe (F) l'eau reminéralisée.

## Patentansprüche

1. Verfahren zur sofortigen Herstellung eines Mineralwassers, das einen vorbestimmten Gehalt an Mineralstoffen aufweist, aus Stadtwasser, das einen bekannten ungeeigneten Gehalt an Mineralstoffen und pH-Wert aufweist, und Verunreinigungen umfasst, wobei das Verfahren die folgenden Schritte umfasst:
• (I) der Mineralgehalt des herzustellenden Mineralwassers wird vordefiniert;
• der Mineralgehalt und der pH-Wert des Stadtwassers werden analysiert (J);
• der vordefinierte Gehalt und der Gehalt des Stadtwassers werden verglichen (K), um zu bestimmen, welche überschüssigen Mineralstoffe zu entfernen und welche fehlenden hinzuzufügen sind, und um das Demineralisierungsverfahren sowie die Art und Menge der zuzugebenden Mineralien festzulegen, wobei die zuzugebenden Mineralien mindestens Calcium und/oder Magnesium umfassen;
• der pH-Wert des gewünschten Mineralwassers und der pH-Wert des Stadtwassers werden miteinander verglichen, um die erforderliche pH-Wert-Anpassung zu bestimmen;
• es wird mindestens eine konzentrierte Lösung, ein Synthese- und/oder ein Aragonitpulver hergestellt, das hinzuzufügende Mineralstoffe umfasst, deren Art und Menge bestimmt worden sind;
danach, jedes Mal, wenn ein Verbraucher Mineralwasser entnehmen möchte:
• wird das Herstellungsverfahren ausgelöst (A);
• werden aus dem Stadtwasser (B) Verunreinigungen entfernt, um gereinigtes Wasser zu erhalten;
• wird das gereinigte Wasser durch selektives Entfernen eines Teils der Mineralien durch selektives teilweises oder vollständiges Entfernen von Mineralien mindestens teilweise entmineralisiert (C);
• wird der pH-Wert des entmineralisierten Wassers durch Einspritzen von Kohlendioxid darin angepasst;
• wird das entmineralisierte Wasser (D) durch Einspritzen eines vorbestimmten Volumens einer konzentrierten Lösung, eines Synthese- und/oder Aragonitpulvers, das mindestens die zuvor bestimmten fehlenden Mineralstoffe umfasst, remineralisiert, um den Gehalt wieder auf den vorbestimmten Wert einzustellen, wobei das Synthesepulver ein mindestens teilweise amorphes Mineralsalzpulver ist und mindestens Calciumcarbonat, Magnesiumcarbonat, Calciumhydroxid oder Magnesiumhydroxid umfasst;
• das remineralisierte Wasser wird entnommen (E);
• die Herstellung von Mineralwasser wird eingestellt;
wobei das Verfahren **dadurch gekennzeichnet ist, dass** bei der Herstellung von Mineralwasser:
• eine bestimmte Wassermenge kontinuierlich fließen gelassen wird, wobei das Wasser einen konstanten Durchfluss aufweist;
• das Volumen wird bis zum Ende des Wasserdurchflusses regelmäßig eingespritzt.

2. Verfahren nach einem der Ansprüche 1, wobei der Schritt zum Remineralisieren des remineralisierten Wassers weiter das Leiten des Wassers über eine Mineralsäule und/oder ein Ionenaustauscherharz umfasst.

3. Verfahren nach einem der Ansprüche 1 bis 2, wobei Kohlendioxid in das remineralisierte Wasser eingespritzt wird (H), um es mit Kohlensäure zu versetzen.

4. Verfahren nach einem der Ansprüche 1 bis 3, wobei das remineralisierte Wasser abgekühlt (G) wird oder das remineralisierte Wasser erwärmt (F) wird.

## Claims

1. A method for the instantaneous production of mineral water having a predetermined mineral content from tap water having an inappropriate mineral content and pH and containing impurities, the method comprising the following steps:
• the mineral content of the mineral water to be produced is predefined (I);
• the mineral content and pH of the tap water are analyzed (J);
• the predefined content and the content of the tap water are compared (K) in order to determine the excess minerals to be removed and the deficient minerals to be added in order to determine a demineralization method and the nature and quantity of the mineral elements to be added; said mineral elements to be added comprising at least calcium and/or magnesium;
• the pH of the desired mineral water and the pH of the tap water are compared to determine the necessary pH adjustment;
• at least one concentrated solution is prepared, a synthetic and/or aragonite powder comprising mineral elements to be added, the nature and quantity of which have been determined;
then, whenever a consumer wishes to withdraw mineral water:
• the production method is initiated (A);
• the impurities (B) are removed from the tap water to obtain purified water;
• the purified water is at least partially demineralized (C) by selectively removing some of the minerals through partial or total selective removal of minerals as previously determined;
• the pH of the demineralized water is adjusted by injecting carbon dioxide;
• the demineralized water is remineralized (D) by injecting a predetermined volume of a concentrated solution, a synthetic and/or aragonite powder comprising at least the deficient mineral elements, the nature of which has been previously determined, in order to readjust the content to the said predefined content, the synthetic powder being a mineral salt powder, at least partially amorphous, and comprising at least calcium carbonate, magnesium carbonate, calcium hydroxide, or magnesium hydroxide;
• the remineralized water is collected (E);
• the production of mineral water is stopped;
the method **characterized in that**, during the production of mineral water:
• a determined quantity of water is made to flow continuously, the water having a flow rate;
• the said volume is injected regularly until the water until the end of the water flow.

2. The method according to claim 1, in which the step of remineralizing the remineralized water further comprises passing the water over a mineral column and/or an ion exchange resin.

3. The method according to one of claims 1 to 2, according to which carbon dioxide (H) is injected into the remineralized water to carbonate it.

4. The method according to one of claims 1 to 3, according to which the remineralized water is cooled (G) or heated (F).
